(19) Europäisches Patentamt
European Patent Office
Office européen des brevets

(11) EP 4 201 828 A1

(12) **EUROPEAN PATENT APPLICATION**
published in accordance with Art. 153(4) EPC

(43) Date of publication:
**28.06.2023 Bulletin 2023/26**

(21) Application number: **21858152.8**

(22) Date of filing: **30.07.2021**

(51) International Patent Classification (IPC):
***B65D 1/00*** *(2006.01)* ***B29C 45/18*** *(2006.01)*
***B29C 49/06*** *(2006.01)* ***B65D 65/40*** *(2006.01)*
***C08K 5/08*** *(2006.01)* ***C08L 67/00*** *(2006.01)*
***C08L 77/00*** *(2006.01)*

(52) Cooperative Patent Classification (CPC):
**B29C 45/18; B29C 49/06; B65D 1/00; B65D 65/40; C08K 5/08; C08L 67/00; C08L 77/00;**
B29C 2049/023

(86) International application number:
**PCT/JP2021/028392**

(87) International publication number:
**WO 2022/039004 (24.02.2022 Gazette 2022/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.08.2020 JP 2020139563**

(71) Applicant: **MITSUBISHI GAS CHEMICAL COMPANY, INC.**
**Chiyoda-ku**
**Tokyo 100-8324 (JP)**

(72) Inventors:
- **DAITO, Masayuki**
  **Hiratsuka-shi, Kanagawa 254-0016 (JP)**
- **OTSUKA, Kosuke**
  **Hiratsuka-shi, Kanagawa 254-0016 (JP)**
- **YAMADA, Takumi**
  **Hiratsuka-shi, Kanagawa 254-0016 (JP)**

(74) Representative: **Vossius & Partner**
**Patentanwälte Rechtsanwälte mbB**
**Siebertstraße 3**
**81675 München (DE)**

# (54) SINGLE-LAYER CONTAINER, MANUFACTURING METHOD THEREOF, AND RECYCLED POLYESTER MANUFACTURING METHOD

(57) Provided is a single-layer container containing a polyester resin (X), a polyamide resin (Y), a blue colorant (A), and a red colorant (B). The content of the polyamide resin (Y) is from 0.05 to 7.0 mass%, and the content of the blue colorant (A) is from 1 to 40 ppm.

EP 4 201 828 A1

## Description

Technical Field

The present invention relates to a single-layer container, a method for manufacturing the same, and a method for manufacturing a recycled polyester.

Background Art

Aromatic polyester resins obtained using an aromatic dicarboxylic acid compound and an aliphatic diol compound as monomers exhibit merits such as transparency, mechanical performance, melt stability, solvent resistance, fragrance retention, gas barrier properties, and recyclability. Therefore, aromatic polyester resins such as polyethylene terephthalate (PET) are widely used in various packaging materials such as films, sheets, and hollow containers. Polyester resins have high gas barrier properties, but their gas barrier properties are not necessarily sufficient for applications requiring an even higher level of gas barrier properties for gases such as oxygen and carbon dioxide. Therefore, as a means to improve the gas barrier properties of polyester resins, aluminum oxide or silicon oxide is vapor deposited onto a molded body or packaging container made from a polyester resin, or a resin having high gas barrier performance is applied and laminated onto a molded body or packaging container made from a polyester resin, or is melted and mixed therewith.

Examples of the gas barrier resins include polyamide resins such as nylon 6 and nylon 66, and ethylene-vinyl alcohol copolymers. Among the polyamide resins, polyxylylene adipamide obtained by polymerizing a diamine component mainly composed of xylylene diamine and a dicarboxylic acid component mainly composed of adipic acid exhibits excellent gas barrier properties. Polyxylylene adipamide has high gas barrier properties, and the glass transition temperature, melting point, and crystallinity of polyxylylene adipamide are similar to those of polyethylene terephthalate, which is a widely used polyester resin, and therefore polyxylylene adipamide is easily laminated onto and melt-mixed with a polyester resin. For this reason, polyxylylene adipamide is very suitable as a material for improving the gas barrier properties of polyester resins.

However, in a polyester resin composition containing a polyamide, yellowing due to heat history is more likely to proceed than with polyester alone. As a result, yellowing occurs particularly in a recycling process in which containers are collected and the resin is reused. This is a factor that reduces the product value of packaging containers, and thus measures for suppressing yellowing are being investigated. For example, Patent Document 1 discloses a multilayer container that includes a polyester resin composition layer containing a polyester resin and an amino group-containing compound having a yellowing-suppression capability, and a polyamide resin layer containing a polyamide resin, and also discloses a method for manufacturing the multilayer container, a method for manufacturing a single-layer container, and a method for manufacturing recycled polyester.

Citation List

Patent Documents

Patent Document 1: WO 2017/057463

Summary of Invention

Technical Problem

As described above, a polyester resin composition containing a polyamide is more likely to undergo yellowing due to a heat history than a simple polyester substance, and in order to suppress hue changes such as yellowing in a recycled polyester obtained after recycling, a compound having the ability to suppress yellowing is added as disclosed in Patent Document 1. However, there is a concern that use of a large amount of such a compound could lead to a decrease in the physical properties of the container and a decrease in barrier performance. Therefore, a demand has existed for a container that contains a sufficient amount of a polyamide in order to exhibit barrier performance, but that can suppress a change in hue of the polyester and increase the colorlessness of the obtained recycled polyester with a small addition amount of the polyamide.

Therefore, an object of the present invention is to provide a single-layer container that can suppress changes in the hue of a recycled polyester when recycled, and from which a recycled polyester having a high level of colorlessness can be obtained, and to also provide a method for manufacturing the single-layer container and a method for manufacturing a recycled polyester having a high level of colorlessness.

Solution to Problem

As a result of diligent investigation in view of the above-described problems, the present inventors discovered that a single-layer container including a polyester resin, a specific amount of a polyamide resin, a blue colorant, and furthermore, a red colorant can solve the problems described above, and thereby the present inventors arrived at the present invention.

The present invention provides the following aspects [1] to [24].

[1] A single-layer container including:

a polyester resin (X);
a polyamide resin (Y);
a blue colorant (A); and
a red colorant (B),
wherein
the content of the polyamide resin (Y) is from 0.05 to 7.0 mass%, and
the content of the blue colorant (A) is from 1 to 40 ppm.

[2] The single-layer container according to [1], wherein the polyester resin (X) includes a constituent unit derived from a dicarboxylic acid and a constituent unit derived from a diol, 80 mol% or more of the constituent unit derived from a dicarboxylic acid is a constituent unit derived from terephthalic acid, and 80 mol% or more of the constituent unit derived from a diol is a constituent unit derived from ethylene glycol.

[3] The single-layer container according to [1] or [2], wherein the polyester resin (X) includes a constituent unit derived from at least one selected from the group consisting of sulfophthalic acids and metal sulfophthalates.

[4] The single-layer container according to any one of [1] to [3], wherein the polyamide resin (Y) includes a constituent unit derived from a diamine and a constituent unit derived from a dicarboxylic acid, 80 mol% or more of the constituent unit derived from a diamine is a constituent unit derived from xylylene diamine, and 80 mol% or more of the constituent unit derived from a dicarboxylic acid is a constituent unit derived from adipic acid.

[5] The single-layer container according to any one of [1] to [4], wherein the blue colorant (A) is at least one selected from the group consisting of dyes and pigments.

[6] The single-layer container according to any one of [1] to [5], wherein the blue colorant (A) is an anthraquinone-based dye.

[7] The single-layer container according to any one of [1] to [6], wherein a mass ratio [(A)/(B)] of the blue colorant (A) to the red colorant (B) is from 20/80 to 80/20.

[8] The single-layer container according to any one of [1] to [7], wherein the red colorant (B) is at least one selected from the group consisting of anthraquinone-based dyes and azo-based dyes.

[9] The single-layer container according to any one of [1] to [8], further including an oxidation accelerator (C).

[10] The single-layer container according to [9], wherein the oxidation accelerator (C) is a compound including a transition metal.

[11] The single-layer container according to [10], wherein the transition metal is at least one selected from the group consisting of cobalt, iron, manganese, and nickel.

[12] The single-layer container according to any one of [1] to [11], wherein the single-layer container is a hollow single-layer container.

[13] A method for manufacturing a single-layer container,

the single-layer container including
a polyester resin (X),
a polyamide resin (Y),
a blue colorant (A), and
a red colorant (B),
the content of the polyamide resin (Y) being from 0.05 to 7.0 mass%, and
the content of the blue colorant (A) being from 1 to 40 ppm,
the method including:

a step 1 of mixing the polyester resin (X), the polyamide resin (Y), the blue colorant (A), and the red colorant (B) to prepare a resin mixture;
a step 2 of injection molding the resin mixture to obtain a single-layer preform; and
a step 3 of blow molding the single-layer preform.

[14] The method according to [13], wherein in the step 1, the polyester resin (X) in a pellet shape, the polyamide resin (Y) in a pellet shape, the blue colorant (A), and the red colorant (B) are mixed at a temperature of 230°C or lower.
[15] The method according to [13] or [14], wherein the blue colorant (A) is a powder, a dispersion, or a solution.
[16] The method according to any one of [13] to [15], wherein the blue colorant (A) is at least one selected from the group consisting of dyes and pigments.
[17] The method according to any one of [13] to [16], wherein the blue colorant (A) is an anthraquinone-based dye.
[18] The method according to any one of [13] to [17], wherein the red colorant (B) is at least one selected from the group consisting of anthraquinone-based dyes and azo-based dyes.
[19] The method according to any one of [13] to [18], wherein in the step 1, an oxidation accelerator (C) is further mixed.
[20] The method according to [19], wherein the oxidation accelerator (C) is a compound including a transition metal.
[21] The method according to [20], wherein the transition metal is at least one selected from the group consisting of cobalt, iron, manganese, and nickel.
[22] The method according to any one of [13] to [21], wherein a core-sheath pellet is used in the step 1, the core-sheath pellet containing the polyester resin (X) and the polyamide resin (Y), and the core-sheath pellet having a core portion and a sheath portion with different compositions.
[23] A method for manufacturing a recycled polyester, the method including recovering polyester from the single-layer container of any one of [1] to [12].
[24] The method according to [23], wherein one or more steps selected from the group consisting of crystallization and solid phase polymerization are implemented after recovering the polyester.

Advantageous Effects of Invention

According to the present invention, a single-layer container that can suppress changes in hue of a recycled polyester when recycled, and from which a recycled polyester having a high level of colorlessness can be obtained, a method for manufacturing the single-layer container and a method for manufacturing a recycled polyester having a high level of colorlessness can be provided.

Description of Embodiments

[Single-layer Container]

A single-layer container of the present invention includes a polyester resin (X), a polyamide resin (Y), a blue colorant (A), and a red colorant (B), and the content of the polyamide resin (Y) is from 0.05 to 7.0 mass%, and the content of the blue colorant (A) is from 1 to 40 ppm.
Note that the content of the polyamide resin (Y) and the content of the blue colorant (A) are contents with respect to the total mass of the single-layer container.

<Polyester Resin (X)>

The polyester resin (X) contained in the single-layer container of the present invention is preferably a polycondensation polymer of a dicarboxylic acid and a diol, and preferably includes a constituent unit derived from a dicarboxylic acid (hereinafter, also referred to as a "dicarboxylic acid unit") and a constituent unit derived from a diol (hereinafter, also referred to as a "diol unit").
Examples of dicarboxylic acid units include constituent units derived from aromatic dicarboxylic acids, constituent units derived from alicyclic dicarboxylic acids, and constituent units derived from aliphatic dicarboxylic acids, and constituent units derived from aromatic dicarboxylic acids are preferred.
Examples of aromatic dicarboxylic acids include terephthalic acid, isophthalic acid, orthophthalic acid, biphenyl dicarboxylic acid, diphenyl ether dicarboxylic acid, diphenylsulfone dicarboxylic acid, diphenylketone dicarboxylic acid, 2,6-naphthalene dicarboxylic acid, 1,4-naphthalene dicarboxylic acid, and 2,7-naphthalene dicarboxylic acid. From perspectives of cost and manufacturing ease, terephthalic acid, isophthalic acid, orthophthalic acid, naphthalene dicarboxylic acid, and 4,4'-biphenyl dicarboxylic acid are preferable, and terephthalic acid, isophthalic acid, and naphthalene dicarboxylic acid are more preferable, and from the perspective of moldability, terephthalic acid and isophthalic acid are further preferable, and terephthalic acid is even more preferable.
Note that as the aromatic dicarboxylic acid, a $C_{1-4}$ alkyl ester of an aromatic dicarboxylic acid may be used.
When the single-layer container of the present invention is to be recycled, the single-layer container may be melt-kneaded with a typical container made of a polyester resin. Since the single-layer container of the present invention includes a unit derived from terephthalic acid as a dicarboxylic acid unit, miscibility of the single-layer container of the present invention with a typical container made of a polyester resin is favorable, and good recyclability is obtained.

As the aromatic dicarboxylic acid, use of a sulfophthalic acid or a metal sulfophthalate is preferable. The metal sulfophthalate is a metal salt of a sulfophthalic acid, and examples of the metal atom include alkali metals and alkaline earth metals.

Specifically, the sulfophthalic acid and metal sulfophthalate are represented by the following formulas (I) and (I'), respectively.

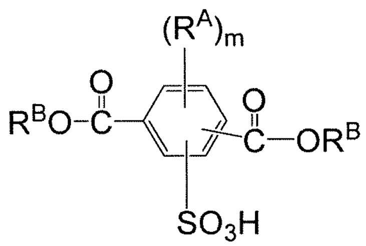

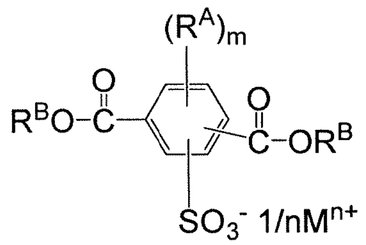

(I) (I')

In formula (I') above, M is a metal atom, and n denotes the valence of M.

Examples of the metal atom M include alkali metals such as lithium, sodium, and potassium; and alkaline earth metals such as beryllium, magnesium, calcium, and strontium. Of these, an alkali metal is preferable, in which sodium or lithium is preferable, and sodium is more preferable. Note that when n is 2 or greater, crosslinking with other units (for example, sulfo groups in other sulfophthalic acid units or metal sulfophthalate units) through M may occur.

In formulas (I) and (I') above, $R^A$ is a substituted or unsubstituted alkyl group or a substituted or unsubstituted aryl group, and m denotes an integer of 0 to 3. Note that when m is 2 or 3, each $R^A$ may be the same or different.

Examples of the alkyl group include a methyl group, ethyl group, n-propyl group, isopropyl group, n-butyl group, t-butyl group, n-octyl group, and 2-ethylhexyl group. Among these, an alkyl group having from 1 to 6 carbons is preferable, and an alkyl group having from 1 to 4 carbons is more preferable.

Examples of the aryl group include a phenyl group and a naphthyl group. Among these, an aryl group having from 6 to 12 carbons is preferable, and a phenyl group is more preferable.

Examples of the substituents possessed by the alkyl group and the aryl group include halogen atoms such as a chlorine atom, a bromine atom, or an iodine atom, an alkyl group, alkenyl group, aryl group, cyano group, hydroxyl group, nitro group, alkoxy group, aryloxy group, acyl group, amino group, mercapto group, alkylthio group, and an arylthio group. Among these groups, those having a hydrogen atom may be further substituted with the substituents described above.

Specific examples of the $R^A$ include a methyl group, ethyl group, n-propyl group, isopropyl group, n-butyl group, t-butyl group, 1-methylpropyl group, 2-methylpropyl group, hydroxymethyl group, 1-hydroxyethyl group, mercaptomethyl group, methyl thioethyl group, phenyl group, naphthyl group, biphenyl group, benzyl group, and 4-hydroxybenzyl group. Of these, a methyl group, ethyl group, and benzyl group are preferable.

In formulas (I) and (I') above, $R^B$ denotes a hydrogen atom or an alkyl group having from 1 to 4 carbons.

The preferred $R^A$ is as described above, but the sulfophthalic acid or metal sulfophthalate used in the polyester resin (X) is preferably a unit represented by the following formula (Ia) or (I'a), respectively, in which m = 0, or in other words, the benzene ring is not substituted by $R^A$.

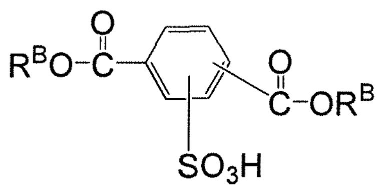

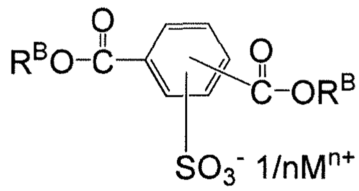

(Ia) (I'a)

In formula (Ia) above, $R^B$ is the same as $R^B$ in formula (I).

Moreover, in formula (I'a) above, $R^B$, M, and n are the same as the $R^B$, M, and n in formula (I').

Furthermore, examples of the sulfophthalic acid represented by formula (Ia) or the metal sulfophthalate represented by formula (I'a) include phthalic acid structures in which two -CO- are bonded at the ortho position, isophthalic

acid structures in which two -CO- are bonded at the meta position, and terephthalic acid structures in which two -CO- are bonded at the para position. Among these, an isophthalic acid structure is preferable. In other words, the sulfophthalic acid or metal sulfophthalate is preferably at least one of a sulfoisophthalic acid represented by formula (Ib) below or a metal sulfoisophthalate represented by formula (I'b) below.

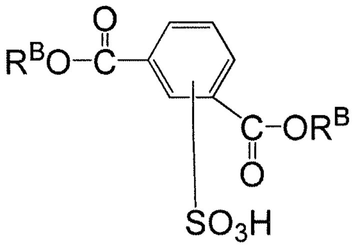

(Ib)

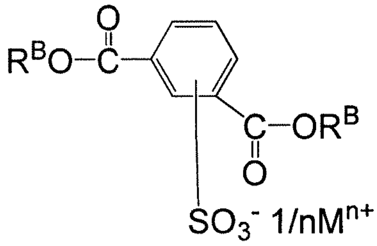

(I'b)

In formula (Ib) above, $R^B$ is the same as $R^B$ in formula (I).

Moreover, in formula (I'b) above, $R^B$, M, and n are the same as the $R^B$, M, and n in formula (I').

The position of the sulfo group in the sulfoisophthalic acid or the metal sulfoisophthalate may be the 2-, 4-, 5-, and 6-positions, but is preferably substituted at the 5-position as represented by the following formula (Ic) or (I'c).

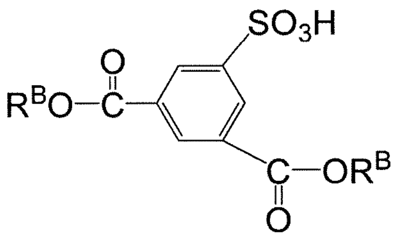

(Ic)

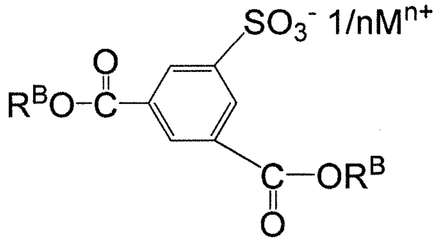

(I'c)

In formula (Ic) above, $R^B$ is the same as $R^B$ in formula (I).

In formula (I'c) above, $R^B$, M, and n are the same as the $R^B$, M, and n in formula (I').

In the polyester resin (X), examples of the sulfoisophthalic acid represented by formula (Ic) or the metal sulfoisophthalate represented by formula (I'c) include 5-sulfoisophthalic acid, sodium 5-sulfoisophthalate, lithium 5-sulfoisophthalate, potassium 5-sulfoisophthalate, calcium bis(5-sulfoisophthalate), sodium dimethyl 5-sulfoisophthalate, and sodium diethyl 5-sulfoisophthalate.

The polyester resin (X) preferably contains a constituent unit derived from at least one selected from the group consisting of sulfophthalic acids and metal sulfophthalates, and in case in which the polyester resin (X) contains a constituent unit derived from at least one selected from the group consisting of sulfophthalic acids and metal sulfophthalates, the polyester resin (X) preferably contains at least a constituent unit derived from a metal sulfophthalate. The content of the constituent units derived from a sulfophthalic acid and a metal sulfophthalate in the polyester resin is preferably from 0.01 to 15 mol%, more preferably from 0.03 to 10.0 mol%, even more preferably from 0.06 to 5.0 mol%, and yet even more preferably from 0.08 to 2.0 mol%.

Examples of the alicyclic dicarboxylic acid include cyclohexane dicarboxylic acid, norbornene dicarboxylic acid, and tricyclodecane dicarboxylic acid.

Examples of the aliphatic dicarboxylic acid include malonic acid, succinic acid, adipic acid, azelaic acid, and sebacic acid.

Examples of the diol unit include constituent units derived from aliphatic diols, constituent units derived from alicyclic diols, and constituent units derived from aromatic diols, and constituent units derived from aliphatic diols are preferable.

Examples of the aliphatic diols include ethylene glycol, 2-butene-1,4-diol, trimethylene glycol, tetramethylene glycol, hexamethylene glycol, neopentyl glycol, methylpentanediol, and diethylene glycol. Among these, ethylene glycol is preferable, and ethylene glycol is more preferable.

Examples of the alicyclic diols include cyclohexane dimethanol, isosorbide, spiroglycol, 2,2,4,4-tetramethyl-1,3-cyclobutanediol, norbornene dimethanol and tricyclodecane dimethanol.

Examples of aromatic diols include bisphenol compounds and hydroquinone compounds.

The polyester resin (X) may have a constituent unit derived from a hydroxycarboxylic acid.

Examples of hydroxycarboxylic acids include aliphatic hydroxycarboxylic acids, alicyclic hydroxycarboxylic acids, and aromatic hydroxycarboxylic acids.

Examples of the aliphatic hydroxycarboxylic acids include 10-hydroxyoctadecanoic acid, lactic acid, hydroxyacrylic acid, 2-hydroxy-2-methylpropionic acid and hydroxybutyric acid.

Examples of the alicyclic hydroxycarboxylic acids include hydroxymethyl cyclohexane carboxylic acid, hydroxymethyl norbornene carboxylic acid, and hydroxymethyl tricyclodecane carboxylic acid.

Examples of the aromatic hydroxycarboxylic acids include hydroxybenzoic acid, hydroxytoluic acid, hydroxynaphthoic acid, 3-(hydroxyphenyl)propionic acid, hydroxyphenylacetic acid, and 3-hydroxy-3-phenylpropionic acid.

The polyester resin (X) may have a constituent unit derived from a monofunctional compound and a constituent unit derived from a polyfunctional compound.

Examples of the monofunctional compound include monocarboxylic acids and monoalcohols, and specifically include aromatic monocarboxylic acids, aliphatic monocarboxylic acids, aromatic monoalcohols, aliphatic monoalcohols, and alicyclic monoalcohols.

Examples of the polyfunctional compound include aromatic polycarboxylic acids, alicyclic polycarboxylic acids, aliphatic polyhydric alcohols, alicyclic polyhydric alcohols, and esters thereof.

The polyester resin (X) preferably has a constituent unit derived from a dicarboxylic acid containing a terephthalic acid-derived constituent unit, and a constituent unit derived from a diol containing an ethylene glycol-derived constituent unit; more preferably has a constituent unit derived from a dicarboxylic acid containing 80 mol% or more of a terephthalic acid-derived constituent unit, and a constituent unit derived from a diol containing 80 mol% or more of an ethylene glycol-derived constituent unit; even more preferably has a constituent unit derived from a dicarboxylic acid containing 90 mol% or more of a terephthalic acid-derived constituent unit, and a constituent unit derived from a diol containing 90 mol% or more of an ethylene glycol-derived constituent unit; and yet even more preferably has a constituent unit derived from a dicarboxylic acid containing 98 mol% or more of a terephthalic acid-derived constituent unit, and a constituent unit derived from a diol containing substantially 100 mol% of an ethylene glycol-derived constituent unit.

Specific examples of the polyester resin (X) include polyethylene terephthalate (PET).

The polyethylene terephthalate (PET) may include a constituent unit derived from an aromatic dicarboxylic acid other than terephthalic acid. The aromatic dicarboxylic acid other than terephthalic acid is preferably one or more selected from isophthalic acid, orthophthalic acid, naphthalene dicarboxylic acid, and 4,4'-biphenyldicarboxylic acid. These compounds are inexpensive, and a copolymerized polyester resin containing these compounds is easily produced.

Among these, isophthalic acid and naphthalene dicarboxylic acid are preferable, and isophthalic acid is more preferable. The polyethylene terephthalate containing a constituent unit derived from isophthalic acid excels in moldability, and is also excellent from the standpoint of preventing whitening of a molded article due to the low crystallization rate. In addition, a polyethylene terephthalate containing a constituent unit derived from naphthalene dicarboxylic acid increases the glass transition point of the resin, improves the heat resistance, and absorbs ultraviolet rays, and therefore, such polyethylene terephthalate is suitably used in the manufacturing of a single-layer container requiring resistance to ultraviolet rays. Note that a 2,6-naphthalene dicarboxylic acid component is preferable as the naphthalene dicarboxylic acid because it is easy to be produced and is highly economical.

When the polyethylene terephthalate contains a constituent unit derived from an aromatic dicarboxylic acid other than terephthalic acid, the proportion of the constituent unit derived from an aromatic dicarboxylic acid other than terephthalic acid is preferably from 1 to 20 mol%, more preferably from 1 to 10 mol%, and even more preferably from 1 to 5 mol% of the dicarboxylic acid units.

Note that one type of polyester resin (X) may be used alone, or two or more types may be combined and used.

The polyester resin (X) can be produced through a known method such as direct esterification or transesterification.

The intrinsic viscosity of the polyester resin (X) is preferably from 0.5 to 2.0 dL/g, and more preferably from 0.6 to 1.5 dL/g. When the intrinsic viscosity is 0.5 dL/g or higher, the mechanical properties of the container are excellent.

Note that the intrinsic viscosity is measured by dissolving the polyester resin in a mixed solvent of phenol/1,1,2,2-tetrachloroethane (= 6/4 mass ratio) to prepare 0.2, 0.4, and 0.6 g/dL solutions, and then measuring the intrinsic viscosity at 25°C using an automatic viscosity measuring apparatus (Viscotek, available from Malvern Instruments Limited).

The content of the polyester resin (X) in the single-layer container of the present invention is preferably from 93.0 to 99.95 mass%, and from the perspectives of gas barrier properties and the suppression of yellowing of the recycled polyester, the content thereof is more preferably from 94.0 to 99.5 mass%, even more preferably from 95.0 to 99.0 mass%, yet even more preferably from 95.5 to 98.5 mass%, and still further preferably from 96.0 to 98.0 mass%.

<Polyamide Resin (Y)>

Examples of the polyamide resin (Y) include xylylene group-containing polyamide resins, nylon 6, nylon 66, nylon 666, nylon 610, nylon 11, nylon 12, and mixtures thereof. Of these, xylylene group-containing polyamide resins are preferable because the gas barrier performance can be improved and the polyamide resin can be easily separated from the polyester layer when recycling. The xylylene group-containing polyamide resin is preferably a polyamide resin containing a constituent unit derived from xylylene diamine.

The xylylene group-containing polyamide resin is obtained by polycondensation of a dicarboxylic acid and a diamine containing a xylylene diamine, and includes a constituent unit derived from a xylylene diamine and a constituent unit derived from a dicarboxylic acid. Furthermore, the xylylene-group containing polyamide resin preferably contains at least 50 mol%, more preferably at least 70 mol%, even more preferably from 80 to 100 mol%, and yet even more preferably from 90 to 100 mol% of xylylene diamine-derived constituent units from amongst the diamine-derived constituent units (diamine units).

The xylylene diamine is preferably meta-xylylene diamine, para-xylylene diamine, or both, and is more preferably meta-xylylene diamine. Furthermore, the diamine units constituting the xylylene group-containing polyamide resin contains preferably at least 50 mol%, more preferably at least 70 mol%, even more preferably from 80 to 100 mol%, and yet even more preferably from 90 to 100 mol% of constituent units derived from meta-xylylene diamine.

When the amount of constituent units derived from meta-xylylene diamine in the diamine units is within the aforementioned range, the gas barrier properties of the polyamide resin are further improved.

The diamine unit in the xylylene group-containing polyamide resin may include only a constituent unit derived from xylylene diamine, or may include a constituent unit derived from diamines other than xylylene diamine. Here, examples of diamines other than xylylene diamine include aliphatic diamines having a linear or branched structure, such as ethylene diamine, tetramethylene diamine, pentamethylene diamine, 2-methylpentane diamine, hexamethylene diamine, heptamethylene diamine, octamethylene diamine, nonamethylene diamine, decamethylene diamine, dodecamethylene diamine, 2,2,4-trimethyl-hexamethylene diamine, and 2,4,4-trimethyl-hexamethylene diamine; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl)ether, paraphenylene diamine, and bis(aminomethyl)naphthalene.

Examples of compounds that can configure the dicarboxylic acid unit in the xylylene group-containing polyamide resin include $C_{4-20}$ $\alpha,\omega$-linear aliphatic dicarboxylic acids, such as succinic acid, glutaric acid, adipic acid, pimelic acid, suberic acid, azelaic acid, sebacic acid, undecanedioic acid, and dodecanedioic acid; alicyclic dicarboxylic acids, such as 1,4-cyclohexane dicarboxylic acid; other aliphatic dicarboxylic acids, such as dimer acids; and aromatic dicarboxylic acids such as terephthalic acid, isophthalic acid, orthophthalic acid, xylylene dicarboxylic acid, and naphthalene dicarboxylic acid, and $C_{4-20}$ $\alpha,\omega$-linear aliphatic dicarboxylic acids are preferable, adipic acid and sebacic acid are more preferable, and from the perspective of obtaining favorable barrier performance, adipic acid is even more preferable.

Furthermore, the xylylene group-containing polyamide resin contains, of the dicarboxylic acid-derived constituent units (dicarboxylic acid units), adipic acid-derived constituent units at an amount of preferably at least 50 mol%, more preferably at least 70 mol%, even more preferably from 80 to 100 mol%, and yet even more preferably from 90 to 100 mol%.

In other words, the polyamide resin (Y) preferably has a constituent unit derived from a diamine and a constituent unit derived from a dicarboxylic acid with 50 mol% or more of the constituent unit derived from a diamine being a constituent unit derived from xylylene diamine and 50 mol% or more of the constituent unit derived from a dicarboxylic acid being a constituent unit derived from adipic acid, more preferably has a constituent unit derived from a diamine and a constituent unit derived from a dicarboxylic acid with 80 mol% or more of the constituent unit derived from a diamine being a constituent unit derived from xylylene diamine and 80 mol% or more of the constituent unit derived from a dicarboxylic acid being a constituent unit derived from adipic acid, and even more preferably has a constituent unit derived from a diamine and a constituent unit derived from a dicarboxylic acid with 90 mol% or more of the constituent unit derived from a diamine being a constituent unit derived from xylylene diamine and 90 mol% or more of the constituent unit derived from a dicarboxylic acid being a constituent unit derived from adipic acid.

The xylylene diamine is preferably meta-xylylene diamine.

Furthermore, the remaining dicarboxylic acid units excluding adipic acid are preferably constituent units derived from $C_{4-20}$ $\alpha,\omega$-linear aliphatic dicarboxylic acids.

Furthermore, examples of the preferred xylylene group-containing polyamide resin are polyamide resins in which 70 mol% or more of the diamine units are constituent units derived from xylylene diamine (preferably meta-xylylene diamine), from 70 to 99 mol% of the dicarboxylic acid units are constituent units derived from adipic acid, and from 1 to 30 mol% of the dicarboxylic acid units are constituent units derived from isophthalic acid. The polyamide resin is preferably a polyamide resin in which at least 80 mol% of the diamine units are constituent units derived from a meta-xylylenediamine

(preferably, meta-xylylenediamine), from 80 to 99 mol% of the dicarboxylic acid units are constituent units derived from adipic acid, and from 1 to 20 mol% of the dicarboxylic acid units are constituent units derived from isophthalic acid, and is more preferably a polyamide resin in which at least 90 mol% of the diamine units are constituent units derived from a meta-xylylenediamine (preferably, meta-xylylenediamine), from 80 to 99 mol% of the dicarboxylic acid units are constituent units derived from adipic acid, and from 1 to 20 mol% of the dicarboxylic acid units are constituent units derived from isophthalic acid.

Adding an isophthalic acid unit as a dicarboxylic acid unit reduces the melting point, and as a result, the molding processing temperature can be lowered, and therefore thermal deterioration during molding can be suppressed, and stretching moldability is improved by delaying the crystallization time.

Furthermore, besides the above-mentioned diamines and dicarboxylic acids, lactams such as ε-caprolactam and laurolactam; aliphatic aminocarboxylic acids such as aminocaproic acid and aminoundecanoic acid; and aromatic aminocarboxylic acids such as p-aminomethylbenzoic acid can also be used as components (copolymerization components) constituting the xylylene group-containing polyamide resin, within a range that does not impair the effect of the present invention.

The xylylene group-containing polyamide resin is preferably produced by a polycondensation reaction (hereinafter, also referred to as "melt polycondensation") in a molten state. For example, the xylylene group-containing polyamide resin is preferably produced by a method in which a nylon salt composed of a diamine and a dicarboxylic acid is subjected to a temperature increase using a pressurization method in the presence of water, and is polymerized in a molten state while removing the water. In addition, the xylylene group-containing polyamide resin may also be produced by a method in which the diamine is added directly to molten dicarboxylic acid, and the contents are polycondensed under atmospheric pressure. In this case, in order to maintain the reaction system in a uniform liquid state, preferably, the diamine is continuously added to the dicarboxylic acid, and during that time, polycondensation is allowed to proceed while increasing the temperature of the reaction system such that the reaction temperature does not fall below the melting points of the produced oligoamide and polyamide. Furthermore, the molecular weight of the xylylene group-containing polyamide can also be increased by further subjecting the product obtained through melt polycondensation to solid phase polymerization as necessary.

The xylylene group-containing polyamide resin is preferably subjected to polycondensation in the presence of a phosphorus atom-containing compound. When the xylylene group-containing polyamide resin is subjected to polycondensation in the presence of a phosphorus atom-containing compound, the processing stability during melt molding is enhanced, and coloration is readily suppressed.

The phosphorous atom-containing compound is preferably a hypophosphorous acid compound or a phosphorous acid compound, and is more preferably a hypophosphorous acid compound.

The phosphorus atom-containing compound is preferably an organic metal salt, and of these, alkali metal salts are more preferable.

From the perspective of promoting a polymerization reaction and the perspective of preventing coloration, examples of the hypophosphorous acid compound include hypophosphorous acid, metal hypophosphites, metal phenyl phosphonites, ethyl hypophosphite, dimethyl phosphinic acid, phenyl methyl phosphinic acid, phenyl phosphonous acid, and ethyl phenyl phosphonite, and metal hypophosphites are preferable.

Examples of the metal hypophosphites include sodium hypophosphite, potassium hypophosphite, lithium hypophosphite, and calcium hypophosphite, and sodium hypophosphite is more preferable.

Examples of the metal phenyl phosphonites include sodium phenyl phosphonite, potassium phenyl phosphonite, and lithium phenyl phosphonite.

Examples of the phosphorous acid compound include phosphorous acid, pyrophosphorous acid, metal phosphites, metal phenyl phosphonates, triethyl phosphite, triphenyl phosphite, ethyl phosphonic acid, phenyl phosphonic acid, and diethyl phenyl phosphonate.

Examples of metal phosphites include sodium hydrogen phosphite, sodium phosphite, potassium phosphite, and calcium phosphite.

Examples of the metal phenyl phosphonates include sodium ethylphosphonate, potassium ethylphosphonate, sodium phenylphosphonate, potassium phenylphosphonate, and lithium phenylphosphonate.

The phosphorus atom-containing compound may be one type, or two or more types may be used in combination.

Furthermore, polycondensation of the xylylene group-containing polyamide resin is preferably carried out in the presence of a phosphorus atom-containing compound and an alkali metal compound. When the usage amount of phosphorus atom-containing compound is large, there is a concern that the polyamide resin may form a gel. Therefore, from the viewpoint of adjusting the rate of the amidation reaction, an alkali metal compound preferably coexists with the phosphorus atom-containing compound.

Examples of the alkali metal compound include alkali metal hydroxides and alkali metal acetates. Examples of the alkali metal hydroxide include lithium hydroxide, sodium hydroxide, potassium hydroxide, rubidium hydroxide, and cesium hydroxide, and examples of the alkali metal acetate include lithium acetate, sodium acetate, potassium acetate,

rubidium acetate, and cesium acetate.

When an alkali metal compound is used in polycondensation of the polyamide resin, from the viewpoint of suppressing the formation of a gel, the usage amount of the alkali metal compound is in a range in which a value obtained by dividing the number of moles of the alkali metal compound by the number of moles of the phosphorus atom-containing compound is preferably from 0.5 to 1, more preferably from 0.55 to 0.95, and even more preferably from 0.6 to 0.9.

The number average molecular weight of the polyamide resin is selected, as appropriate, according to the application and molding method of the single-layer container, but from the perspectives of moldability and strength of the single-layer container, the number average molecular weight is preferably from 10000 to 60000, and more preferably from 11000 to 50000.

Note that the number average molecular weight of the polyamide resin is calculated from the following equation (X).

$$\text{Number average molecular weight} = 2 \times 1000000/([COOH] + [NH_2]) \text{ .... (X)}$$

(where [COOH] represents the terminal carboxyl group concentration (μmol/g) in the polyamide resin, and $[NH_2]$ represents the terminal amino group concentration (μmol/g) in the polyamide resin.)

Here, the terminal carboxyl group concentration is a value that is calculated by neutralization titration of a solution of the polyamide in benzyl alcohol with an aqueous sodium hydroxide solution.

From the viewpoint of suppressing yellowing of the recycled polyester, the terminal amino group concentration of the polyamide resin (Y) in the present invention is preferably not greater than 50 μmol/g, more preferably not greater than 45 μmol/g, even more preferably not greater than 40 μmol/g, yet even more preferably not greater than 30 μmol/g, and particularly preferably not greater than 20 μmol/g.

The terminal amino group concentration in the polyamide resin (Y) is determined by precisely weighing the polyamide resin, dissolving the polyamide resin in a phenol/ethanol (4/1 by volume) solution under stirring at 20 to 30°C until the polyamide resin is completely dissolved, and then rinsing the inner wall of the container with 5 mL of methanol under stirring, followed by neutralization titration with a 0.01 mol/L hydrochloric acid aqueous solution.

The method for adjusting the terminal amino group concentration of the polyamide resin (Y) is not particularly limited, but the terminal amino group concentration can be suppressed to a low level through, for example, a method in which the charged ratio (molar ratio) of the diamine and the dicarboxylic acid is adjusted, and a polycondensation reaction is carried out; a method in which a monocarboxylic acid capable of capping an amino group is charged together with the diamine and the dicarboxylic acid, and a polycondensation reaction is carried out; or a method in which the polycondensation reaction is carried out, after which the resultant is reacted with a carboxylic acid capable of capping an amino group.

The content of the polyamide resin (Y) in the single-layer container of the present invention is from 0.05 to 7.0 mass%, and from the perspectives of gas barrier properties and the suppression of yellowing of the recycled polyester, the content thereof is preferably from 0.5 to 6.0 mass%, more preferably from 1.0 to 5.0 mass%, even more preferably from 1.5 to 4.5 mass%, and still further preferably from 2.0 to 4.0 mass%. The content of the polyamide resin (Y) in the single-layer container is the content relative to the total mass of the single-layer container.

<Blue Colorant (A)>

The single-layer container of the present invention contains a blue colorant (A), and the content of the blue colorant (A) is from 1 to 40 ppm relative to the total mass of the single-layer container.

In relation to the total mass of the single-layer container of the present invention, the content of the blue colorant (A) in the single-layer container is from 1 to 40 ppm, and from the perspectives of mixability during manufacturing and moldability and effectively suppressing yellowing of the recycled polyester, the content thereof is preferably from 1.5 to 35 ppm, more preferably from 2 to 30 ppm, even more preferably from 3 to 25 ppm, and still even more preferably from 10 to 25 ppm.

Note that "ppm" in the present invention indicates parts per million by mass.

The blue colorant (A) is preferably at least one selected from the group consisting of dyes and pigments, and is more preferably a dye from the perspective of transparency.

Blue dyes and blue pigments are preferred as the dyes and pigments.

Yellowing of the recycled polyester obtained from the single-layer container of the present invention can be suppressed by using an extremely small amount of a dye or pigment. Further, a recycled polyester having excellent transparency can be obtained using an even smaller amount of a dye.

Examples of the dye used as the blue colorant (A) include anthraquinone-based dyes, pyrazolone-based dyes, coumarin-based dyes, perinone-based dyes, methine-based dyes, and quinophthalone-based dyes, and anthraquinone-based dyes are preferable.

Examples of the anthraquinone-based dyes include anthraquinone-based dyes in which a hydrogen atom of the aromatic ring is substituted with an aromatic amine, an aliphatic amine, a hydroxyl group, or a halogen, and an anthraquinone-based dye in which a hydrogen atom of the aromatic ring is substituted with an aromatic amine is preferable.

Yellowing of the recycled polyester obtained from the single-layer container of the present invention can be suppressed by using an extremely small amount of an anthraquinone-based dye.

The anthraquinone-based dye is more preferably an anthraquinone-based blue dye.

The anthraquinone-based dye is preferably a compound represented by Formula (1) below.

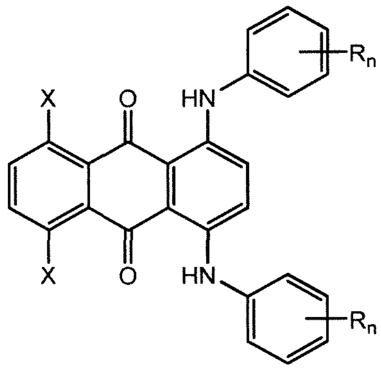

(1)

(Wherein, n represents the number of R, and the two n are each independently from 1 to 5. Each R independently represents a $C_{1-4}$ alkyl group. The two X each independently represent a hydrogen atom or a hydroxyl group.)

In Formula (1), n is from 1 to 5, preferably from 2 to 5, and more preferably from 2 to 3. Yellowing ($\Delta b^*$ value) of the recycled polyester can be suppressed by setting n to the range described above. Each R is independently a $C_{1-4}$ alkyl group, and is preferably at least one selected from the group consisting of a methyl group and an ethyl group. The R is preferably substituted at least at the para position or ortho position relative to the amino group, is more preferably substituted at least at the ortho position, and is even more preferably substituted at the para position and the ortho position. The two X are each independently a hydrogen atom or a hydroxyl group, and a hydrogen atom is preferable.

Specific examples of the compounds represented by Formula (1) include 1,4-bis[(2-ethyl-6-methylphenyl)amino]anthraquinone, Solvent Blue 97, Solvent Blue 104, Solvent Green 3, and Solvent Green 28, and 1,4-bis[(2-ethyl-6-methylphenyl)amino] anthraquinone, Solvent Blue 97, and Solvent Blue 104 are preferable.

In relation to the total mass of the single-layer container of the present invention, the content of the dye used as the blue colorant (A) in the single-layer container is preferably from 1 to 40 ppm, and from the perspectives of mixability during manufacturing and moldability and effectively suppressing yellowing of the recycled polyester, the content thereof is more preferably from 1.5 to 35 ppm, even more preferably from 2 to 30 ppm, yet even more preferably from 3 to 25 ppm, and still even more preferably from 10 to 25 ppm.

Examples of pigments used as the blue colorant (A) include phthalocyanine compounds.

Examples of phthalocyanine compounds include metal-free phthalocyanines and copper phthalocyanines, and copper phthalocyanines are preferable.

Examples of copper phthalocyanines include $\alpha$-type copper phthalocyanine (Pigment Blue 15:1), $\beta$-type copper phthalocyanine (Pigment Blue 15:3 or 15:4), $\varepsilon$-type copper phthalocyanine (Pigment Blue 15:6), chlorinated copper phthalocyanine, and brominated copper phthalocyanine, and $\alpha$-type copper phthalocyanine and $\beta$-type copper phthalocyanine are preferable.

From the perspective of effectively suppressing yellowing of the recycled polyester, the content of the pigment used as the blue colorant (A) in the single-layer container of the present invention is, in relation to the total mass of the single-layer container, preferably from 1 to 40 ppm, and more preferably from 1.5 to 35 ppm, and from the perspectives of mixability and moldability during manufacturing, the content thereof is even more preferably from 3 to 30 ppm, and yet even more preferably from 8 to 25 ppm.

One type of the blue colorant (A) may be used alone, or two or more types may be used in combination.

Commercially available products of the blue colorant (A) include MACROLEX Blue RR Gran (anthraquinone-based dye, available from Lanxess AG), MACROLEX Blue 3R (1,4-bis [(2-ethyl-6-methylphenyl)amino]anthraquinone, anthraquinone-based dye, available from Lanxess AG), Oracet Blue 690 (anthraquinone-based dye, available from BASF SE), HELIOGEN BLUE K6907 (Pigment Blue 15:1, $\alpha$-type copper phthalocyanine pigment, available from BASF

SE), and HELIOGEN BLUE K7090 (Pigment Blue 15:3, β-type copper phthalocyanine pigment, available from BASF SE).

<Red Colorant (B)>

The single-layer container of the present invention includes a red colorant (B).

The red colorant (B) suppresses green color in a -a* direction as measured with a color difference meter when the single-layer container of the present invention is recycled to obtain recycled polyester.

In relation to the total mass of the single-layer container of the present invention, the content of the red colorant (B) in the single-layer container is preferably from 1 to 40 ppm, from the perspective of effectively suppressing greening of the recycled polyester, the content thereof is more preferably from 1.5 to 35 ppm, and from the perspectives of mixability and moldability during manufacturing, the content thereof is even more preferably from 2 to 30 ppm, yet even more preferably from 3 to 25 ppm, and still even more preferably from 10 to 25 ppm.

A mass ratio [(A)/(B)] of the blue colorant (A) to the red colorant (B) in the single-layer container of the present invention is preferably from 20/80 to 80/20, more preferably from 30/70 to 70/30, and even more preferably from 40/60 to 60/40.

When the mass ratio is within this range, the hue change of the recycled polyester obtained after recycling is small, and in particular, a polyester having excellent achromaticity is obtained.

The red colorant (B) is preferably at least one selected from the group consisting of dyes and pigments, and is more preferably a dye from the perspective of transparency.

Among the dyes, the red colorant (B) is preferably at least one selected from the group consisting of anthraquinone-based dyes and azo-based dyes, and from the perspective of thermal resistance, an anthraquinone-based dye is more preferable.

Furthermore, the red colorant (B) is preferably a red dye, is more preferably at least one selected from the group consisting of anthraquinone-based red dyes and azo-based red dyes, and from the perspective of thermal resistance, is even more preferably an anthraquinone-based red dye.

Greening of recycled polyester obtained from the single-layer of the present invention can be suppressed by using extremely small amounts of an anthraquinone-based red dye and an azo-based red dye.

The anthraquinone-based dye is preferably a compound represented by Formula (2) below.

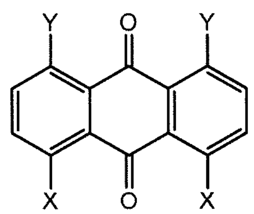

(2)

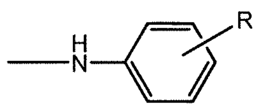

(2a)

(In Formula (2), the two Y are each independently a hydrogen atom or a group represented by Formula (2a), and the two X are each independently a hydrogen atom or a hydroxyl group. However, at least one Y is a group represented by Formula (2a).

Furthermore, in Formula (2a), R represents a $C_{1-4}$ alkyl group.)

In Formula (2), each of the two Y independently represents a hydrogen atom or a group represented by Formula (2a), but at least one Y is a group represented by Formula (2a). Preferably, one Y is a group represented by Formula (2a), and the other Y is a hydrogen atom.

The two X each independently represent a hydrogen atom or a hydroxyl group, but when one Y is a group represented by Formula (2a), the X bonding to the same aromatic ring is preferably a hydroxyl group.

In Formula (2a), R represents a $C_{1-4}$ alkyl group and is preferably at least one selected from the group consisting of a methyl group and an ethyl group. Note that when the two Y are both groups represented by Formula (2a), the two R in the groups represented by Formula (2a) may be the same or different. R is preferably substituted at the para position with respect to the amino group.

Specific examples of the compound represented by Formula (2) include Solvent Violet 36 and Solvent Violet 13, and Solvent Violet 36 is preferable.

In relation to the total mass of the single-layer container of the present invention, the content of the dye used

as the red colorant (B) in the single-layer container is preferably from 1 to 40 ppm, and from the perspectives of mixability during manufacturing and moldability and effectively suppressing yellowing and greening of the recycled polyester, the content thereof is more preferably from 1.5 to 35 ppm, even more preferably from 2 to 30 ppm, yet even more preferably from 3 to 25 ppm, and still even more preferably from 10 to 25 ppm.

One type of the red colorant (B) may be used alone, or two or more types may be used in combination.

Examples of commercially available products of the red colorant (B) include MACROLEX Violet 3R Gran (anthraquinone-based dye, available from Lanxess AG), MACROLEX Violet B Gran (anthraquinone-based dye, available from Lanxess AG), MACROLEX Red Violet R Gran (Disperse Violet 31, Disperse Violet 26, Solvent Violet 59, anthraquinone-based dye, available from Lanxess AG), MACROLEX RED 5B Gran (Disperse Violet 31, Disperse Violet 26, Solvent Violet 59, anthraquinone-based dye, available from Lanxess AG), and MACROLEX Red B (Solvent Red 195, azo-based dye, available from Lanxess AG).

<Oxidation Accelerator (C)>

The single-layer container of the present invention preferably contains an oxidation accelerator (C) for the purpose of inducing an oxidation reaction of the polyamide resin (Y) to increase the oxygen absorption function and further enhance the gas barrier properties.

The oxidation accelerator (C) is preferably a compound containing a transition metal, and is more preferably at least one selected from the group consisting of simple transition metal substances, oxides, inorganic acid salts, organic acid salts, and complexes.

Examples of the inorganic acid salts include carbonates, sulfates, nitrates, phosphates, silicates, and halides such as chloride and bromide.

Examples of the organic acid salts include carboxylates, sulfonates, and phosphonates. Examples of the complexes include complexes with a β-diketone or a β-keto acid ester.

The transition metal is preferably a Group VIII transition metal of the periodic table of elements, and from the perspective of expressing oxygen absorption performance, the transition metal is more preferably at least one selected from the group consisting of cobalt, iron, manganese, and nickel, and is even more preferably cobalt.

More specifically, from the perspective of favorably expressing oxygen absorption performance, among the compounds containing a transition metal, the compound is preferably one selected from the group consisting of transition metal-containing carboxylates, carbonates, acetylacetonate complexes, oxides and halides, is more preferably at least one selected from the group consisting of transition metal-containing carboxylates, carbonates, and acetylacetonate complexes, and is even more preferably a transition metal-containing carboxylate.

Examples of carboxylates include octanoates, neodecanoates, naphthenates, stearates, and acetates.

Specifically, at least one selected from octanoates, neodecanoates, naphthenates, stearates, acetates, carbonates and acetylacetonate complexes is more preferable.

Of these, cobalt carboxylates (carboxylates of cobalt) such as cobalt octanoate, cobalt naphthenate, cobalt acetate, cobalt neodecanoate, and cobalt stearate are more preferable.

One type of the oxidation accelerator (C) may be used alone, or two or more types may be used in combination.

Additionally, from the perspectives of increasing gas barrier properties and suppressing yellowing and greening of the recycled polyester resin, the content of the oxidation accelerator (C) is preferably from 0.0001 to 1.0 parts by mass, more preferably from 0.01 to 0.8 parts by mass, even more preferably from 0.05 to 0.6 parts by mass, and still even more preferably from 0.08 to 0.2 parts by mass, relative to 100 parts by mass of the polyamide resin (Y).

Further, from the perspectives of increasing gas barrier properties and suppressing yellowing and greening of the recycled polyester resin, the content of the transition metal of the oxidation accelerator (C) is preferably from 0.00001 to 0.1 parts by mass, more preferably from 0.0001 to 0.08 parts by mass, and even more preferably from 0.0003 to 0.06 parts by mass, relative to 100 parts by mass of the polyamide resin (Y). Note that when a carboxylate containing a transition metal is used as the oxidation accelerator (C), the content of the transition metal refers to the content of the transition metal itself in the compound containing the transition metal.

<Other Components>

The single-layer container of the present invention may contain other components. Examples of the other components include thermal stabilizers, photostabilizers, moisture-proof agents, waterproofing agents, lubricants, and spreading agents.

The single-layer container of the present invention may contain, within a range that does not impair the effects of the present invention, a resin besides the polyester resin (X) and the polyamide resin (Y). The total content of the polyester resin (X) and the polyamide resin (Y) in the single-layer container of the present invention is preferably from 97 to 100 mass%, and more preferably from 99 to 100 mass%, relative to the amount of resin in the entire polyester

layer. Furthermore, the total content of the polyester resin (X), the polyamide resin (Y), the blue colorant (A), and the red colorant (B) in the single-layer container of the present invention is preferably from 97 to 100 mass%, and more preferably from 99 to 100 mass%, relative to the total mass of the single-layer container. The single-layer container of the present invention may consist only of the polyester resin (X), the polyamide resin (Y), the blue colorant (A), and the red colorant (B).

<Characteristics, Etc. of Single-Layer Container>

The single-layer container of the present invention is preferably a hollow container. If the single-layer container of the present invention is a hollow container, the total thickness of the trunk section of the hollow container (that is, the total thickness of all layers of the trunk section) is preferably from 100 μm to 5 mm, more preferably from 150 μm to 3 mm, and even more preferably from 200 μm to 2 mm. In the present invention, gas barrier properties can be ensured by setting the thickness in the trunk section of the container to this range.

When the single-layer container of the present invention is a hollow container, the single-layer container is preferably a liquid packaging container used by filling the inside of the hollow container with a liquid, and is even more preferably a beverage packaging container. Examples of the liquid to be filled inside include beverages, liquid seasonings, chemicals, pharmaceuticals, and detergents, and beverages for which deterioration due to oxygen can be effectively prevented by the single-layer container of the present invention are preferable.

Examples of the beverages include water, carbonated water, oxygenated water, hydrogen water, milk, milk products, juices, coffee, coffee beverages, carbonated soft drinks, teas, and alcoholic beverages.

Examples of the liquid seasonings include sauces, soy sauce, syrups, rice wine seasonings, and dressings.

Examples of chemicals include agricultural chemicals and pesticides.

The oxygen barrier property of the single-layer container of the present invention can be evaluated through an oxygen permeability test by the MOCON method in accordance with ASTM D3985. When a total amount of 25 g of resin is formed into a single-layer hollow container having an internal volume of 500 mL with a mass ratio of the polyester resin (X) to the polyamide resin (Y) being 97:3, the oxygen permeability (cc/(bottle•0.21 atm•day)) of the single-layer container of the present invention is preferably 0.050 or less, more preferably 0.040 or less, even more preferably 0.035 or less, and further preferably 0.030 or less. As for the single-layer container of the present invention containing an oxidation accelerator (C), when a total amount of 25 g of resin is formed into the single-layer hollow container having an internal volume of 500 mL with a mass ratio of the polyester layer to the polyamide layer being 97:3, the oxygen permeability (cc/(bottle•0.21 atm•day)) of the single-layer container of the present invention is preferably 0.020 or less, more preferably 0.010 or less, and even more preferably 0.005 or less. Note that the single-layer hollow container can be manufactured according to the method described in the examples.

The OX-TRAN 2/61 available from MOCON, Inc. can be used to measure the oxygen permeability. The 500 mL container is filled with 100 mL of water, nitrogen at 1 atm is circulated inside the container at a rate of 20 mL/min under conditions including an oxygen partial pressure of 0.21 atm, a temperature of 23°C, a container internal humidity of 100% RH, and an external humidity of 50% RH, and oxygen contained in the nitrogen after circulating inside the container is detected by a coulometric sensor, and thereby the oxygen permeability is measured.

[Method for Manufacturing Single-Layer Container]

The method for manufacturing the single-layer container of the present invention is a method for manufacturing a single-layer container including a polyester resin (X), a polyamide resin (Y), a blue colorant (A), and a red colorant (B), with the content of the polyamide resin (Y) being from 0.05 to 7.0 mass%, and the content of the blue colorant (A) being from 1 to 40 ppm, the manufacturing method including: a step 1 of mixing the polyester resin (X), the polyamide resin (Y), and the blue colorant (A) to prepare a resin mixture; a step 2 of injection molding the resin mixture to obtain a single-layer preform; and a step 3 of blow molding the single-layer preform.

<Step 1 (Step of preparing resin mixture)>

In step 1, the polyester resin (X), the polyamide resin (Y), the blue colorant (A), and the red colorant (B) are mixed to prepare a resin mixture.

The method of mixing may be dry blending or melt blending (melt kneading), but from the perspectives of reducing the heat history and preventing degradation of the resin or colorants, dry blending and melt blending with the masterbatch method are preferable. Further, from the perspective of preventing the colorant from adhering to and remaining on a molding machine or around the molding machine in step 2, melt blending is preferable, and of the melt blending techniques, the masterbatch method is preferable from the perspective of reducing the heat history and preventing degradation of the resin and colorant.

In step 1, the pellet-shaped polyester resin (X), the pellet-shaped polyamide resin (Y), the blue colorant (A), and the red colorant (B) are preferably mixed at a temperature of 230°C or lower, are more preferably mixed at a temperature of 150°C or lower, and are even more preferably mixed at a temperature of 100°C or lower. When mixing is implemented at a temperature of 230°C or lower, the heat history can be reduced, and degradation of the resin or colorant can be prevented. It is conceivable that this is achieved because the resin can maintain the pellet shape, and therefore thermal degradation is minimal. Dry blending is preferably implemented when mixing at a temperature of 230°C or lower.

The blue colorant (A) suitably used in step 1 is the same as the blue colorant (A) described in the <Blue Colorant (A)> section, and is preferably at least one selected from the group consisting of dyes and pigments, and is more preferably an anthraquinone-based dye.

Further, the blended amount of the blue colorant (A) used in step 1 is preferably an amount such that the content in the single-layer container that is ultimately obtained is the same as the content disclosed in the <Blue Colorant (A)> section above. In the total mass of raw materials constituting the single-layer container, the blending amount of the blue colorant (A) is preferably from 1 to 40 ppm, more preferably from 1.5 to 35 ppm, even more preferably from 2 to 30 ppm, still even more preferably from 3 to 25 ppm, and yet even more preferably from 10 to 25 ppm.

Furthermore, the blue colorant (A) is preferably in the form of a powder, a dispersion, or a solution, and is more preferably in the form of a powder. When in these forms, the blue colorant (A) can be more easily and uniformly mixed with the polyester resin (X) and the polyamide resin (Y).

By mixing the pellet-shaped polyester resin (X), the pellet-shaped polyamide resin (Y) and the powdered blue colorant (A) at a low temperature in this manner, the colorant can be uniformly mixed with the resins while degradation of the resins and blue colorant is prevented.

The red colorant (B) is the same as the red colorant described in the <Red Colorant (B)> section above, and is preferably at least one selected from the group consisting of dyes and pigments, is more preferably at least one selected from the group consisting of anthraquinone-based dyes and azo-based dyes, is even more preferably at least one selected from the group consisting of anthraquinone-based red dyes and azo-based red dyes, and from the perspective of thermal resistance, is yet even more preferably an anthraquinone-based red dye.

Further, the blended amount of the red colorant (B) used in step 1 is preferably an amount such that the content in the single-layer container that is ultimately obtained is the same as the content disclosed in the <Red Colorant (B)> section above. In the total mass of raw materials constituting the single-layer container, the blending amount of the red colorant (B) is preferably from 1 to 40 ppm, more preferably from 1.5 to 35 ppm, even more preferably from 2 to 30 ppm, still even more preferably from 3 to 25 ppm, and yet even more preferably from 10 to 25 ppm.

Furthermore, the red colorant (B) is preferably in the form of a powder, a dispersion, or a solution, and is more preferably in the form of a powder. The red colorant (B) in these forms can be more easily and uniformly mixed with the resins.

In addition, the oxidation accelerator (C) is preferably further mixed in step 1.

The oxidation accelerator (C) suitably used in step 1 is the same as the oxidation accelerator (C) described in the <Oxidation Accelerator (C)> section above, and is preferably a compound containing a transition metal, and the transition metal is more preferably at least one selected from the group consisting of cobalt, iron, manganese, and nickel. Further, the blending amount of the oxidation accelerator (C) used in step 1 is preferably an amount such that the content in the single-layer container that is ultimately obtained is the same as that described in the <Oxidation Accelerator (C)> section above.

Examples of the mixing device used in the dry blending include a tumbler mixer, a ribbon mixer, a Henschel mixer, and a Banbury mixer.

Examples of the method for mixing the polyester resin (X), the polyamide resin (Y), the blue colorant (A), and the red colorant (B) by melt blending in step 1 include a masterbatch method and a full compounding method, and the masterbatch method is preferable.

The masterbatch method is a method of kneading, in step 1, a small amount of the polyamide resin or polyester resin and the blue colorant (A) to form a masterbatch, and then mixing with the remaining resins. Further, in obtaining a masterbatch, the red colorant (B) may also be kneaded at the same time. Alternatively, a small amount of the polyamide resin or polyester resin and the red colorant (B) may be kneaded to obtain another masterbatch. In other words, preferably, in step 1, the polyamide resin or the polyester resin and the blue colorant (A) are kneaded and then mixed with the remaining resins, and more preferably, in step 1, the polyamide resin or polyester resin, the blue colorant (A), and the red colorant (B) are kneaded and then mixed with the remaining resins.

The polyamide resin or polyester resin is preferably used in the masterbatch, and these may be mixed and used. From the perspective of suppressing yellowing due to heat history, use of the polyester resin is preferable, and from the following perspectives, use of the polyamide resin is preferable.

It is conceivable that yellowing can be effectively suppressed by pre-mixing the nitrogen-containing polyamide, which is likely to cause yellowing of a recycled resin, with the blue colorant (A).

The polyamide resin used in the masterbatch is preferably a polyamide resin (Y), and is more preferably the same as the remaining polyamide resin (Y).

The polyester resin used in the masterbatch is preferably the polyester resin (X), and is more preferably the same as the polyester resin (X) of the polyester layer.

The amount of the polyamide resin or the polyester resin used in the masterbatch is preferably from 1 to 20 mass%, and more preferably from 3 to 15 mass% relative to the resin amount of the entire polyamide layer.

As for the method for obtaining a masterbatch in which a polyamide resin or a polyester resin and the blue colorant (A) and the red colorant (B) are kneaded, assuming that the melting point of the resin used in the masterbatch is denoted by Tm, from the perspective of sufficient mixing, the kneading temperature (°C) is preferably from Tm + 5 to Tm + 60, more preferably from Tm + 10 to Tm + 50, and even more preferably from Tm + 15 to Tm + 40. Specifically, the kneading temperature is even more preferably from 245 to 300°C, yet even more preferably from 250 to 290°C, and still even more preferably from 255 to 280°C. In addition, from the perspective of sufficiently kneading, the kneading time is preferably from 10 to 600 seconds, more preferably from 20 to 400 seconds, and even more preferably from 30 to 300 seconds. Examples of the device used for kneading include an open type mixing roll, a non-open type Banbury mixer, a kneader, and a continuous kneader (such as a single-screw kneader, a twin-screw kneader, and a multi-screw kneader).

Furthermore, examples of methods for mixing the masterbatch and the remaining resins include dry blending and a kneading method, and dry blending is preferable. For the dry blending, preferably pellets of the masterbatch, pellets of the remaining polyamide resin (Y), and pellets of the remaining polyester resin (X) are mixed using a mixing device such as a tumbler mixer.

Additionally, in step 1, the oxidation accelerator (C) is preferably kneaded into the remaining polyamide resin (Y) or the remaining polyester resin (X). The colorants and the oxidation accelerator (C) can be dry blended as separate pellets without simultaneously heating and kneading, and thereby degradation of the colorants and the oxidation accelerator (C) can be prevented.

The full compounding method is a method of kneading and mixing the total amounts of the polyamide resin (Y), the polyester resin (X), the blue colorant (A), and the red colorant (B) used in the single-layer container of the present invention.

From the perspective of sufficient mixing, the kneading temperature is preferably from 245 to 300°C, more preferably from 250 to 290°C, and even more preferably from 255 to 280°C. In addition, from the perspective of sufficiently kneading, the kneading time is preferably from 10 to 600 seconds, more preferably from 20 to 400 seconds, and even more preferably from 30 to 300 seconds. Examples of the device used for kneading include an open type mixing roll, a non-open type Banbury mixer, a kneader, and a continuous kneader (such as a single-screw kneader, a twin-screw kneader, and a multi-screw kneader).

The resin mixture obtained in this step has the same composition as that of the single-layer container of the present invention.

The resin used in step 1 preferably uses a pellet-shaped polyester resin (X) and a pellet-shaped polyamide resin (Y) as described above, but core-sheath pellets containing the polyester resin (X) and the polyamide resin (Y) and having a core portion and a sheath portion with different compositions may be used.

The compositions of the core portion and the sheath portion are different, and specifically, the ratio of the polyester resin (X) to the polyamide resin (Y) is different. Of these, preferably, the core portion is a resin having a high ratio of the polyamide resin (Y), and the sheath portion is a resin having a high ratio of the polyester resin (X), and more preferably, the core portion is formed from the polyamide resin (Y) and the sheath portion is formed from the polyester resin (X).

Moreover, in forming the core-sheath pellets, the oxidation accelerator (C) may be introduced into either the core portion or the sheath portion. In other words, use of core-sheath pellets in which the oxidation accelerator (C) is contained in either the core portion or the sheath portion is preferable, and use of core-sheath pellets in which the oxidation accelerator (C) is contained in the sheath portion is more preferable. The oxidation accelerator (C) used here is preferably an oxidation accelerator described in the <Oxidation Accelerator (C)> section above, and cobalt carboxylates (carboxylates of cobalt), such as cobalt octanoate, cobalt naphthenate, cobalt acetate, cobalt neodecanoate, and cobalt stearate, are more preferable.

The core-sheath pellets may replace some or all of the pellet-shaped polyester resin (X) and the pellet-shaped polyamide resin (Y), but when core-sheath pellets containing the oxidation accelerator (C) are used, the core-sheath pellets preferably replace some of the pellet-shaped polyester resin (X) and the pellet-shaped polyamide resin (Y) such that the amount of the oxidation accelerator (C) is within the suitable range described in the <Oxidation Accelerator (C)> section above.

<Step 2 (Step of obtaining single-layer preform)>

In step 2, the resin mixture is injection molded to obtain a single-layer preform.

Also, in the injection molding, the resin mixture is extruded into a mold and then injection molded to form the single-layer preform.

<Step 3 (Blow molding step)>

In step 3, the single-layer preform is blow molded.

In the method of manufacturing a single-layer container of the present invention, the single-layer preform (single-layer parison) obtained in step 2 is preferably molded by stretch blowing.

Of these, the single-layer preform obtained by injection molding in step 2 is preferably stretch-blow molded, and more preferably, the single-layer preform obtained by injection molding in step 2 is biaxially stretch-blow molded. The conditions for biaxial stretch-blow molding preferably include a preform heating temperature of from 95 to 110° C, a primary blow pressure of from 0.5 to 1.2 MPa, and a secondary blow pressure of from 2.0 to 2.6 MPa. The occurrence of uneven thickness and uneven stretching is suppressed through biaxial stretch-blow molding under these conditions, and therefore a single-layer container having excellent strength can be obtained.

[Method for manufacturing recycled polyester]

The single-layer container of the present invention is suitable for recycling as described above, and recycled polyester can be manufactured using the single-layer container of the present invention as a raw material.

The recycled polyester manufacturing method of the present invention preferably includes recovering polyester from the single-layer container.

That is, the manufacturing method thereof preferably includes a step of recovering polyester from a single-layer container that includes the polyester resin (X), the polyamide resin (Y), the blue colorant (A), and the red colorant (B) with the content of the polyamide resin (Y) being from 0.05 to 7.0 mass%, and the content of the blue colorant (A) being from 1 to 40 ppm.

The recycled polyester obtained by the present manufacturing method can be used in various applications such as resin molded articles and fibers.

Details of the recycled polyester manufacturing method of the present invention will be described below.

In the present manufacturing method, a used single-layer container is ordinarily used as the single-layer container, but an unused single-layer container may also be used. Examples of the used single-layer container include those that have been distributed in the market and then collected.

In the present manufacturing method, first, if a lid is attached to the single-layer container, the lid is preferably removed from the single-layer container.

Next, the container is ground and washed as needed, and then the polyester is recovered as recycled polyester (recovery step).

Next, if necessary, the polyester is granulated to obtain pellets (granulation step).

Further, if necessary, a crystallization step and a solid phase polymerization step are implemented (crystallization/solid phase polymerization step).

Each step is described below.

<Recovery step>

The recovery step is a step of grinding the single-layer container to recover recycled polyester.

The single-layer container can be ground using a grinder such as a single-screw grinder, a twin-screw grinder, a three-screw grinder, or a cutter mill. The ground product obtained by grinding is formed into, for example, a flake shape, a powdered shape, or a bulk shape. However, a large portion of the single-layer container, such as the trunk section, is thin with a thickness of several mm or less, and therefore most of the ground product is ordinarily flake-shaped. Note that the flake-shaped ground product refers to a flaky or flat shaped product having a thickness of approximately 2 mm or less.

The polyester and polyamide resins cannot be separated in the grinding step, but the ground product obtained from the single-layer container of the present invention has a high polyester content, and for convenience of explanation, this ground product is referred to as recycled polyester.

<Granulation step>

The recycled polyester that is recovered is preferably granulated and formed into pellets in order to simplify handling during molding and the like.

The granulation may be implemented before or after the below-described crystallization/solid phase polymerization step, but it is preferable to implement granulation before the crystallization/solid phase polymerization step. When granulation is implemented before the crystallization/solid phase polymerization step, handling ease in the crystallization/solid phase polymerization step is favorable.

In the granulation step, it is preferable to plasticize and granulate the ground product through melt blending. Examples of the granulation device for plasticization and granulation include a single-screw extruder, a twin-screw extruder, and a multi-screw extruder, but any known granulation device can be used. The shape of the pellets is preferably cylindrical, spherical, or elliptical.

The granulation preferably includes, for example, extruding the plasticized recycled polyester into a strand, and cutting into pellets using a pelletizer while cooling in a water tank. Pellets removed from the water tank are usually dried to remove moisture adhered to the surface.

<Crystallization/solid phase polymerization step>

After the above-described step of recovering the polyester, it is preferable to implement one or more steps selected from a crystallization step and a solid phase polymerization step, and it is more preferable to implement both the crystallization step and the solid phase polymerization step. The crystallization/solid phase polymerization step is preferably implemented on the pelletized polyester described above, but may be implemented on a non-pelletized polyester (for example, the ground product).

Note that when crystallization and solid phase polymerization are both implemented, the polyester is preferably crystallized and then subjected to solid phase polymerization.

Crystallization of the polyester is implemented by maintaining the polyester under constant heating. The crystallization is preferably implemented by heating the polyester at a temperature of from 100 to 230°C, for example. The polyester is crystallized, and thereby mutual fusing of the polyester and adhering of the polyester to the inner surface of the device during solid phase polymerization and molding are prevented.

The solid phase polymerization is preferably implemented by maintaining at a temperature of from the (polyester melting point - 80°C) to less than the melting point of the polyester for a certain duration of time. By implementing the solid phase polymerization at a temperature lower than the melting point, melting of the polyester is prevented, and for example, adhering of the polyester to the device surface, which results in a decrease in work efficiency, is prevented. Also, by implementing the solid phase polymerization at a temperature of equal to or higher than the (melting point - 80°C), the polymerization proceeds at a sufficient polymerization rate, and the desired physical properties are easily obtained.

Solid phase polymerization may be carried out under vacuum conditions, and may be carried out under an inert gas stream such as nitrogen or argon. If solid phase polymerization is carried out under vacuum conditions, the vacuum pressure is preferably 1.0 torr or less, more preferably 0.5 torr or less, and even more preferably 0.1 torr or less. Furthermore, under both vacuum conditions and an inert gas stream such as nitrogen or argon, the oxygen concentration remaining in the system is preferably reduced as much as possible, and the oxygen concentration is preferably 300 ppm or less, and more preferably 30 ppm or less. When the oxygen concentration is set to 30 ppm or less, appearance defects such as yellowing are less likely to occur.

Furthermore, when the solid phase polymerization is implemented under vacuum conditions, it is preferable to uniformly maintain heat transfer while constantly repeating the stirring or mixing of the polyester. When the solid phase polymerization is implemented in the presence of an inert gas, it is preferable to keep the surface of the polyester in contact with a dry gas at all times under a stream of the dry gas.

Examples of the solid-phase polymerization device for carrying out the crystallization/solid phase polymerization step include a tumbler-type batch device equipped with a heating jacket, a dry silo-type device provided with inert gas stream equipment, a crystallization device provided internally with a stirrer blade and a discharging screw, and a reactor provided internally with a stirrer blade and a discharging screw. Note that the crystallization and solid phase polymerization are preferably implemented consecutively or simultaneously in the same device.

The heating time for the solid phase polymerization is determined in a timely manner based on the device and other conditions, but the time may be any time as long as the polyester obtains sufficient physical properties.

The solid phase polymerization maintains the polyester at a high temperature for a long period of time, and therefore impurities present in the polyester may deteriorate the quality such as the color tone. In the removal step described above, a large portion of the polyamide resin is preferably removed, and in this case, the deterioration of quality that may occur during solid phase polymerization is minimized.

In the recycled polyester manufacturing method of the present invention, steps in addition to the steps described above may be implemented, and a washing step may be implemented to remove contents adhering to the interior of the single-layer container. The washing is preferably implemented by rinsing with a liquid, and may be washing with water, washing with an alkaline aqueous solution, or both.

Furthermore, the washing may be implemented before the single-layer container is ground into a ground product, or may be implemented after grinding, but the washing is preferably implemented before any of granulation, crystallization, and solid phase polymerization are implemented. Furthermore, the washing step may be implemented simultaneously with the grinding step using a grinder called a wet grinder that simultaneously carries out washing and grinding.

In addition, when the washing step is implemented, a drying step may be implemented after the washing step. By implementing the drying step, the amount of moisture in the recycled polyester obtained by the present method can be reduced, and therefore high quality recycled polyester can be provided with high thermal stability and the like. The drying step can be implemented, for example, through air blowing or hot air using a dryer.

Examples

The present invention will be described more specifically hereinafter using examples and comparative examples, but the present invention is not limited to these examples.

[Raw Materials]

The polyester resin, blue colorant, red colorant, and oxidation accelerator used in the examples and comparative examples were as follows. Furthermore, a polyamide resin manufactured in the following Manufacturing Example 1 was used as the polyamide resin.

<Polyester resin>

Polyester resin (X1): polyethylene terephthalate (intrinsic viscosity: 0.83 dL/g, melting point: 252°C), trade name: Polyclear (U. S. registered trademark) Refresh PET 1101, available from Auriga Polymers Inc.

Polyester resin (X2): polyethylene terephthalate, trade name: Modified Polyethylene Terephthalate 8912, available from Auriga Polymers Inc.

<Blue colorant>

Blue RR: Solvent Blue 97 (anthraquinone-based dye), trade name: MACROLEX Blue RR Gran, available from Lanxess AG

<Red colorant>

Violet 3R: Solvent Violet 36 (anthraquinone-based dye), trade name: MACROLEX Violet 3R Gran, available from Lanxess AG

<Oxidation accelerator>

Cobalt(II) stearate: available from Tokyo Chemical Industry Co., Ltd.

<Polyamide resin>

Manufacturing Example 1 (Manufacturing of polyamide resin (Y1))

A reaction container having an internal volume of 50 liters and equipped with a stirrer, a partial condenser, a total condenser, a thermometer, a dropping funnel, a nitrogen introduction tube, and a strand die was filled with precisely weighed materials including 15000 g (102.6 mol) of adipic acid, 13.06 g (123.3 mmol, 151 ppm as a phosphorus atom concentration in the polyamide) of sodium hypophosphite monohydrate ($NaH_2PO_2 \cdot H_2O$), and 6.849 g (83.49 mmol, 0.68 as a ratio of the number of moles with respect to the sodium hypophosphite monohydrate) of sodium acetate, and then sufficiently subjected to nitrogen purging, after which the contents of the system were heated to 170°C under a small nitrogen stream while being stirred. Next, 13896 g (102.0 mol, 0.994 as a charged molar ratio) of meta-xylylenediamine was added dropwise under stirring, and the temperature inside the system was continuously increased while removing condensed water that was produced to outside of the system. After the completion of dropwise addition of the meta-xylylenediamine, the reaction was continued for 40 minutes at an internal temperature of 260°C. Subsequently, the inside of the system was pressurized with nitrogen, and the obtained polymer was removed from the strand die and pelletized to obtain approximately 24 kg of polyamide.

Next, the polyamide was inserted into a jacketed tumble dryer provided with a nitrogen gas introduction tube, a vacuum line, a vacuum pump, and a thermocouple for measuring the internal temperature, and the inside of the tumble dryer was sufficiently purged with nitrogen gas having a purity of 99 vol% or higher while the tumble dryer was rotated at a constant speed, after which the tumble dryer was heated under the same nitrogen gas stream, and the pellet temperature was increased to 150°C over a period of approximately 150 minutes. When the pellet temperature reached 150°C, the pressure inside the system was reduced to 1 torr or less. Heating was once again continued, and after the pellet temperature was increased to 200°C over approximately 70 minutes, the temperature was maintained at 200°C for 30 to 45 minutes. Next, nitrogen gas having a purity of 99 vol% or higher was introduced into the system, and the tumble dryer was cooled while being rotated, and a polyamide resin (Y1) was obtained. The terminal amino group concentration was measured, and was found to be 14.4 μmol/g.

<Polyamide resin mixture containing blue colorant and red colorant>

Manufacturing Example 2 (Polyamide resin mixture (Y2))

An amount of 99.74 mass% of the polyamide resin (Y1), 0.13 mass% of Blue RR as the blue colorant, and 0.13 mass% of Violet 3R as the red colorant were dry blended in advance. Next, the dry blended mixture was melt-kneaded at 260°C using a twin-screw extruder (TEM26SX available from Toshiba Machine Co., Ltd.), and masterbatch pellets were obtained. Subsequently, the pellets were dried in a vacuum dryer at 150°C for 5 hours, and a polyamide resin mixture (Y2) was obtained.

<Polyester resin mixture containing oxidation accelerator>

Manufacturing Example 3 (Polyester resin mixture (X3))

An amount of 98.94 mass% of the polyester resin (X1) and 1.06 mass% of cobalt(II) stearate as the oxidation accelerator were dry blended in advance. Next, the dry blended mixture was melt-kneaded at 280°C using a twin-screw extruder (TEM26SX available from Toshiba Machine Co., Ltd.), and masterbatch pellets were obtained. Subsequently, the pellets were dried in a vacuum dryer at 150°C for 5 hours, and a polyester resin mixture (X3) was obtained.

Manufacturing Example 4 (Polyester resin mixture (X4))

An amount of 98.94 mass% of the polyester resin (X2) and 1.06 mass% of cobalt(II) stearate as the oxidation accelerator were dry blended in advance. Next, the dry blended mixture was melt-kneaded at 280°C using a twin-screw extruder (TEM26SX available from Toshiba Machine Co., Ltd.), and masterbatch pellets were obtained. Subsequently, the pellets were dried in a vacuum dryer at 150°C for 5 hours, and a polyester resin mixture (X4) was obtained.

[Single-layer Container]

Examples 1 to 8 and Comparative Examples 1 and 2

<Preform molding>

The polyester resin, the polyamide resin, the polyamide resin composition, and the polyester resin composition were inserted into a blender at the mass ratios noted in Table 1 and then dry blended at 25°C, and a mixture was prepared. The prepared mixture was fed into a preform injection molding machine (available from Sumitomo Heavy Industries, Ltd., model: SE130DU-CI) and injection molded under the following conditions, and a single-layer preform was obtained.

The molding conditions for the single-layer preform were as presented below.

- Mass of one preform: 25 g
- Hot runner/cylinder temperature: 285°C
- Hot runner nozzle temperature: 290°C
- Mold coolant temperature: 15°C
- Molding cycle time: 33 sec

<Bottle molding>

The obtained preform was biaxially stretched and blow molded using a blow molding device (EFB1000ET, available from Frontier Inc.), and a bottle (hollow container) was obtained. The overall length of each bottle was 223 mm, the outer diameter was 65 mm, and the internal volume was 500 mL, and the bottom part was petaloid shaped. No dimples were provided in the trunk section. The composition (container composition) of the obtained bottle is shown in Table 2.

The biaxial stretching and blow molding conditions were as indicated below.

Preform heating temperature: 103°C
Stretching rod pressure: 0.7 MPa
Primary blow pressure: 1.1 MPa
Secondary blow pressure: 2.5 MPa
Primary blow delay time: 0.30 seconds
Primary blow time: 0.30 seconds
Secondary blow time: 2.0 seconds
Blow exhaust time: 0.6 seconds
Mold temperature: 15°C

[Table 1]

Table 1

| | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|
| Polyamide resin (Y1) | mass% | 2.85 | 1.85 | 3.69 | 1.85 | 2.85 | 1.85 | 3.69 | 1.85 | 3.00 | 3.00 |
| Polyamide resin composition (Y2) (polyamide resin + blue colorant + red colorant) | mass% | 0.15 | 1.15 | 2.31 | 1.15 | 0.15 | 1.15 | 2.31 | 1.15 | - | - |
| Polyester resin (X1) | mass% | 97 | 97 | 94 | - | 87 | 87 | 84 | - | 97 | - |
| Polyester resin (X2) | mass% | - | - | - | 97 | - | - | - | 87 | - | - |
| Polyester resin composition (X3) (polyester resin (X1) + oxidation accelerator) | mass% | - | - | - | - | 10 | 10 | 10 | - | - | 97 |
| Polyester resin composition (X4) (polyester resin (X2) + oxidation accelerator) | mass% | - | - | - | - | - | - | - | 10 | - | - |
| Total | mass% | 100 | 100 | 100 | 100 | 100 | 100 | 100 | 100 | 100 | 100 |

[Evaluation Methods]

<Oxygen permeability (Evaluation of oxygen barrier property)>

The oxygen permeability was evaluated by the following method.

An oxygen permeability test by the MOCON method was conducted in accordance with ASTM D3985. The oxygen permeability was measured using the OX-TRAN 2/61 available from MOCON, Inc. A 500 mL bottle obtained in each of the examples and comparative examples was filled with 100 mL of water, nitrogen at 1 atm was circulated inside the bottle at a rate of 20 mL/min under conditions including an oxygen partial pressure of 0.21 atm, a temperature of 23°C, a bottle internal humidity of 100% RH, and an external humidity of 50% RH, and oxygen contained in the nitrogen after circulating inside the bottle was detected by a coulometric sensor, and thereby the oxygen permeability was measured. The lower measurement limit was set to 0.001 Cc/(bottle•day•0.21 atm). In Table 2, "<0.001" indicates that the value was below the lower limit of measurement.

The oxygen permeability was determined using a value for the amount of oxygen permeation after the passage of 7 days from the startup of measurements. A smaller oxygen permeation amount indicates a better oxygen barrier property.

[Manufacturing of Recycled Polyester]

<Recovery and granulation step>

Ten kilograms of the hollow single-layer container obtained in each of Examples 1 to 8 and Comparative Examples 1 and 2 were ground with a grinder having a mesh diameter of 8 mm, and the resulting flake-shaped ground product was recovered as recycled polyester.

The recovered recycled polyester was extruded and formed into a strand shape by a twin-screw extruder (TEM26SX available from Toshiba Machine Co., Ltd.) at a heater temperature of 270°C and a discharge rate of 20 kg/hr, and then cut with a pelletizer and formed into pellets while being cooled in a water tank.

<Crystallization/solid phase polymerization step>

The pellets obtained in the granulation step were heated at 200°C for 7 hours under vacuum conditions with the pressure reduced to 1 torr or less. The pellets were removed after the heating treatment, and the yellow chromaticity $\Delta b^*$ and the green chromaticity $\Delta a^*$ were evaluated by the following evaluation methods. The results are shown in Table 2.

[Evaluation Methods]

<Yellow chromaticity $\Delta b^*$>

The yellow chromaticity $\Delta b^*$ of recycled polyester pellets obtained in the [Manufacturing of recycled polyester] was measured according to the following method and evaluated by the following criteria.

In accordance with JIS Z 8722, the pellets were poured into a 30 mmφ cell container, and the color tone of the pellets was measured four times by the reflection method using the color difference meter ZE-2000 (a 12 V, 20 W halogen lamp light source, available from Nippon Denshoku Industries Co., Ltd.), and an average value thereof was determined and used as the color tone.

Note that the b* value represents the chromaticity. A +b* represents a yellow direction, and a -b* represents a blue direction. Also, a smaller absolute value of the $\Delta b^*$ value means a greater suppression of yellowing. The smaller absolute value also means a higher level of achromaticity. The $\Delta b^*$ value indicates a difference between the b* value of a sample from the following examples and comparative examples and the b* value of the polyester resin alone, subjected to the same treatment as in the examples and comparative examples.

<Green chromaticity $\Delta a^*$>

The green chromaticity $\Delta a^*$ of recycled polyester pellets obtained in the [Manufacturing of recycled polyester] was measured according to the following method and evaluated by the following criteria.

In accordance with JIS Z 8722, the pellets were poured into a 30 mmφ cell container, and the color tone of the pellets was measured four times by the reflection method using the color difference meter ZE-2000 (a 12 V, 20 W halogen lamp light source, available from Nippon Denshoku Industries Co., Ltd.), and an average value thereof was determined as used as the color tone.

Note that the a* value represents the chromaticity. A +a* represents a red direction, and a -a* represents a green direction. Also, a smaller absolute value of the Δa* value means a greater suppression of greening. The smaller absolute value also means a higher level of achromaticity. The Δa* value indicates a difference between the a* value of a sample from the following examples and comparative examples and the a* value of the polyester resin alone, subjected to the same treatment as in the examples and comparative examples.

[Table 2]

Table 2

| | | | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|---|---|
| Container Composition | Polyester | (X1) PET1101 | mass% | 97 | 97 | 94 | - | 97 | 97 | 94 | - | 97 | 97 |
| | resin | (X2) PET8912 | | - | - | - | 97 | - | - | - | 97 | - | - |
| | Polyamide resin | (Y1) | mass% | 3 | 3 | 6 | 3 | 3 | 3 | 6 | 3 | 3 | 3 |
| | Blue colorant | Blue RR | ppm | 2 | 15 | 30 | 15 | 2 | 15 | 30 | 15 | - | - |
| | Red colorant | Violet 3R | ppm | 2 | 15 | 30 | 15 | 2 | 15 | 30 | 15 | - | - |
| | Oxidation accelerator | Cobalt (II) stearate | ppm | - | - | - | - | 1062 | 1062 | 1062 | 1062 | - | 1062 |
| | Total | | mass% | 100 | 100 | 100 | 100 | 100 | 100 | 100 | 100 | 100 | 100 |
| Evaluation | Oxygen (cc/(bottle•day•0.21 | permeability | atm)) | 0.038 | 0.038 | 0.025 | 0.038 | <0.001 | <0.001 | <0.001 | <0.001 | 0.038 | <0.001 |
| | Yellow | chromaticity | $\Delta b^*$ | 2.6 | 0.8 | 1.2 | 2.3 | 1.0 | 1.2 | 1.8 | 2.7 | 7.0 | 20.0 |
| | Green | chromaticity | $\Delta a^*$ | 1.3 | 0.5 | 0.7 | 0.5 | 0.4 | 0.6 | 1.0 | 0.6 | 1.2 | 1.7 |

As shown in Table 2, the single-layer containers of the Examples demonstrated that by adding a small amount of a blue colorant and a red colorant, yellowing and greening of a recycled polyester in recycling can be suppressed, and a recycled polyester exhibiting excellent colorlessness can be obtained. Furthermore, because the added amount of the colorants is small, the cost of the single-layer container and recycled resin can also be reduced.

## Claims

1. A single-layer container comprising:

   a polyester resin (X);
   a polyamide resin (Y);
   a blue colorant (A); and
   a red colorant (B),
   wherein
   the content of the polyamide resin (Y) is from 0.05 to 7.0 mass%, and
   the content of the blue colorant (A) is from 1 to 40 ppm.

2. The single-layer container according to claim 1, wherein the polyester resin (X) comprises a constituent unit derived from a dicarboxylic acid and a constituent unit derived from a diol, 80 mol% or more of the constituent unit derived from a dicarboxylic acid being a constituent unit derived from terephthalic acid, and 80 mol% or more of the constituent unit derived from a diol being a constituent unit derived from ethylene glycol.

3. The single-layer container according to claim 1 or 2, wherein the polyester resin (X) comprises a constituent unit derived from at least one selected from the group consisting of sulfophthalic acids and metal sulfophthalates.

4. The single-layer container according to any one of claims 1 to 3, wherein the polyamide resin (Y) comprises a constituent unit derived from a diamine and a constituent unit derived from a dicarboxylic acid, 80 mol% or more of the constituent unit derived from a diamine being a constituent unit derived from xylylene diamine, and 80 mol% or more of the constituent unit derived from a dicarboxylic acid being a constituent unit derived from adipic acid.

5. The single-layer container according to any one of claims 1 to 4, wherein the blue colorant (A) is at least one selected from the group consisting of dyes and pigments.

6. The single-layer container according to any one of claims 1 to 5, wherein the blue colorant (A) is an anthraquinone-based dye.

7. The single-layer container according to any one of claims 1 to 6, wherein a mass ratio [(A)/(B)] of the blue colorant (A) to the red colorant (B) is from 20/80 to 80/20.

8. The single-layer container according to any one of claims 1 to 7, wherein the red colorant (B) is at least one selected from the group consisting of anthraquinone-based dyes and azo-based dyes.

9. The single-layer container according to any one of claims 1 to 8, further comprising an oxidation accelerator (C).

10. The single-layer container according to claim 9, wherein the oxidation accelerator (C) is a compound comprising a transition metal.

11. The single-layer container according to claim 10, wherein the transition metal is at least one selected from the group consisting of cobalt, iron, manganese, and nickel.

12. The single-layer container according to any one of claims 1 to 11, wherein the single-layer container is a hollow single-layer container.

13. A method for manufacturing a single-layer container,

    the single-layer container comprising
    a polyester resin (X),

a polyamide resin (Y),
a blue colorant (A), and
a red colorant (B),
the content of the polyamide resin (Y) being from 0.05 to 7.0 mass%, and
the content of the blue colorant (A) being from 1 to 40 ppm,
the method comprising:

a step 1 of mixing the polyester resin (X), the polyamide resin (Y), the blue colorant (A), and the red colorant (B) to prepare a resin mixture;
a step 2 of injection molding the resin mixture to obtain a single-layer preform; and
a step 3 of blow molding the single-layer preform.

**14.** The method according to claim 13, wherein in the step 1, the polyester resin (X) in a pellet shape, the polyamide resin (Y) in a pellet shape, the blue colorant (A), and the red colorant (B) are mixed at a temperature of 230°C or lower.

**15.** The method according to claim 13 or 14, wherein the blue colorant (A) is a powder, a dispersion, or a solution.

**16.** The method according to any one of claims 13 to 15, wherein the blue colorant (A) is at least one selected from the group consisting of dyes and pigments.

**17.** The method according to any one of claims 13 to 16, wherein the blue colorant (A) is an anthraquinone-based dye.

**18.** The method according to any one of claims 13 to 17, wherein the red colorant (B) is at least one selected from the group consisting of anthraquinone-based dyes and azo-based dyes.

**19.** The method according to any one of claims 13 to 18, wherein in the step 1, an oxidation accelerator (C) is further mixed.

**20.** The method according to claim 19, wherein the oxidation accelerator (C) is a compound comprising a transition metal.

**21.** The method according to claim 20, wherein the transition metal is at least one selected from the group consisting of cobalt, iron, manganese, and nickel.

**22.** The method according to any one of claims 13 to 21, wherein a core-sheath pellet is used in the step 1, the core-sheath pellet containing the polyester resin (X) and the polyamide resin (Y), and the core-sheath pellet having a core portion and a sheath portion with different compositions.

**23.** A method for manufacturing a recycled polyester, the method comprising recovering polyester from the single-layer container of any one of claims 1 to 12.

**24.** The method according to claim 23, wherein one or more steps selected from the group consisting of crystallization and solid phase polymerization are implemented after recovering the polyester.

## INTERNATIONAL SEARCH REPORT

International application No.
PCT/JP2021/028392

**A. CLASSIFICATION OF SUBJECT MATTER**

Int.Cl. B65D1/00(2006.01)i, B29C45/18(2006.01)i, B29C49/06(2006.01)i, B65D65/40(2006.01)i, C08K5/08(2006.01)i, C08L67/00(2006.01)i, C08L77/00(2006.01)i
FI: B65D1/00110, C08K5/08, C08L67/00, C08L77/00, B29C45/18, B29C49/06, B65D65/40D

According to International Patent Classification (IPC) or to both national classification and IPC

**B. FIELDS SEARCHED**

Minimum documentation searched (classification system followed by classification symbols)
Int.Cl. B65D1/00, B29C45/18, B29C49/06, B65D65/40, C08K5/08, C08L67/00, C08L77/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2017/057463 A1 (MITSUBISHI GAS CHEMICAL COMPANY, INC.) 06 April 2017 (2017-04-06), paragraphs [0009], [0018], [0048], [0063], [0067], [0073] | 1-24 |
| Y | JP 2013-517157 A (MITSUBISHI POLYESTER FILM, INC.) 16 May 2013 (2013-05-16), paragraphs [0011], [0039], [0040] | 1-24 |
| Y | JP 2018-43773 A (MITSUBISHI GAS CHEMICAL COMPANY, INC.) 22 March 2018 (2018-03-22), paragraph [0045] | 9-12, 19-24 |

☐ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>31 August 2021 | Date of mailing of the international search report<br>07 September 2021 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2021/028392

| | | |
|---|---|---|
| WO 2017/057463 A1 | 06 April 2017 | US 2018/0273231 A1<br>paragraphs [0018], [0019], [0032], [0058], [0138], [0174]-[0176], [0180], [0181]<br>EP 3357690 A1 |
| JP 2013-517157 A | 16 May 2013 | US 2011/0168325 A1<br>paragraphs [0011], [0042], [0043]<br>US 2013/0276967 A1<br>WO 2011/088084 A1<br>EP 2524015 A1<br>KR 10-2012-0135206 A |
| JP 2018-43773 A | 22 March 2018 | US 2018/0072844 A1<br>paragraph [0109]<br>EP 3296097 A1 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017057463 A